# EUROPEAN PATENT SPECIFICATION

(11) **EP 1 318 633 B1**
(45) Date of publication and mention of the grant of the patent: **19.03.2008**
(21) Application number: 02027203.5
(22) Date of filing: 05.12.2002
(51) Int. Cl.: H04L 12/56

(54) **Mobile/portable terminal and PDP context management method used therefor in constantly-on state**
Mobiles/tragbares Endgerät und hierfür verwendetes PDP-Kontextverwaltungsverfahren in dauernd-eingeschaltetem Zustand
Terminal portable/mobile et méthode de gestion de contexte PDP associée à l'état connecté permanent

(30) Priority: 05.12.2001 JP 2001370794
(43) Date of publication of application: 11.06.2003
(73) Proprietor: NEC CORPORATION, Tokyo (JP)
(72) Inventor: Okanoue, Yasuyo, Minato-ku, Tokyo (JP)
(74) Representative: von Samson-Himmelstjerna, Friedrich

(56) References cited:
- WO-A-01/28168
- US-A1- 2001 015 977

## Description

### BACKGROUND OF THE INVENTION

### Field of the invention

The present invention relates to a mobile/portable terminal, and to a PDP context management method used therefor in an always-on state, and, more particularly, to a push service using a portable terminal device.

### Prior art

Recently, delivery services of various kinds of information, such as a game, an image, industrial information, and an on-line magazine, using the Internet have become more widespread with regard to the portable terminal device.

"Preserved PDP (Packet Data Protocol) context which preserves an IP (Internet Protocol) address at any time, and which is preserved in a state in which data can be delivered at any time" is defined according to 3GPP (third Generation Partnership Project), and a push service using the above Preserved PDP context is used for the above information delivery.

The above-described push service automatically sends contents (data) from a push server, and uses the always-on (Preservation state, Preserved) PDP context [a logical session in an Air network].

That is, as an IP address which is allocated to a portable terminal device can be preserved in GGSN if the always-on PDP context has been established between the portable terminal device and GGSN [Gateway GPRS (General Packet Radio Service) Supporting Node], push data may be sent to the IP address of the portable terminal device through GGSN.

However, a portable terminal device which uses radio communication is used in a case, for example, in which the terminal device is out of a service area, or in which the terminal device is moved to a position in a bad radio condition, that is, in an environment in which squelch disconnection is frequently generated, and it is not easy to preserve the always-on PDP context.

Document US 2001/0015977 discloses a mobile/portable terminal to which a PDP (Packet Data Protocol) context is connected at any time in order to receive a push service form a server, comprising a PDP context management which performs a health check between the terminal, and a terminal point of the PDP context on the side of a network.

Document WO 01/28168 A1 discloses the transfer of packet data from a network server to a mobile communication station by use of a PDP connection.

### OBJECT OF THE INVENTION

Accordingly, the present invention has been made for solving the above problems, and the object of the present invention is to provide a mobile/portable terminal which may prevent non-delivery of push data, and an always-on PDP Context Management method used therefore.

### SUMMARY OF THE INVENTION

In order to solve the above object, the present invention provides a mobile/portable terminal according to claim 1 and an always-on PDP Context Management method according claim 3.

That is, the mobile/portable terminal according to the present invention comprises, the PDP (Packet Data Protocol) context which is required to be connected to the terminal at any time in order to receive a push service from a server, that is, the PDP Context Management (Preserved PDP Context Management) which provides a management step for the always-on PDP context (Preserved PDP context).

More specifically speaking, in the mobile/portable terminal according to the present invention, push data which have been received from the always-on PDP context terminating at MTF (Mobile Termination Function) are transferred to TCP/IP (Transmission Control Protocol/Internet Protocol) at TAF (Terminal Adaptation Function) for protocol processing and are delivered to application software for processing the push data.

The above PDP Context Management has a logic for establishment of the always-on PDP context at power-on of the mobile/portable terminal, and for re-establishment of the always-on PDP context, at least, in assumed circumstances such as squelch disconnection (out of a service area) for a long time, the squelch disconnection (out of a service area) for a short time, and a case in which a request for deactivation of the PDP context is received from the side of a network. Accordingly, non-delivery of push data can be eliminated when nonconformity in recognition between states of PMM (Packet Mobility Management) and PDP is generated in the side of a network and that of the mobile/portable terminal.

In a word, the mobile/portable terminal according to the present invention is characterized in that the establishment of the always-on PDP context may be guaranteed by health check between the terminal and the terminal point of the PDP context on the side of the network.

### BRIEF DESCRIPTION OF THE DRAWINGS

FIG. 1 is a block diagram showing a configuration of a mobile/portable terminal according to one embodiment of the present invention;
FIG. 2 is a view showing one example of a network to which one embodiment of the present invention is applied;
FIG. 3 is a view showing squelch disconnection in a state in which the PDP context is active in one embodiment of the present invention;
FIG. 4 is a view showing transition between combinations of PMM states and PDP states in one embodiment of the present invention; and
FIG. 5 is a view showing a configuration of an ICMP-echo requesting message which is used for health check in one example of the present invention.

### DETAILED DESCRIPTION OF THE PREFERRED EMBODIMENTS

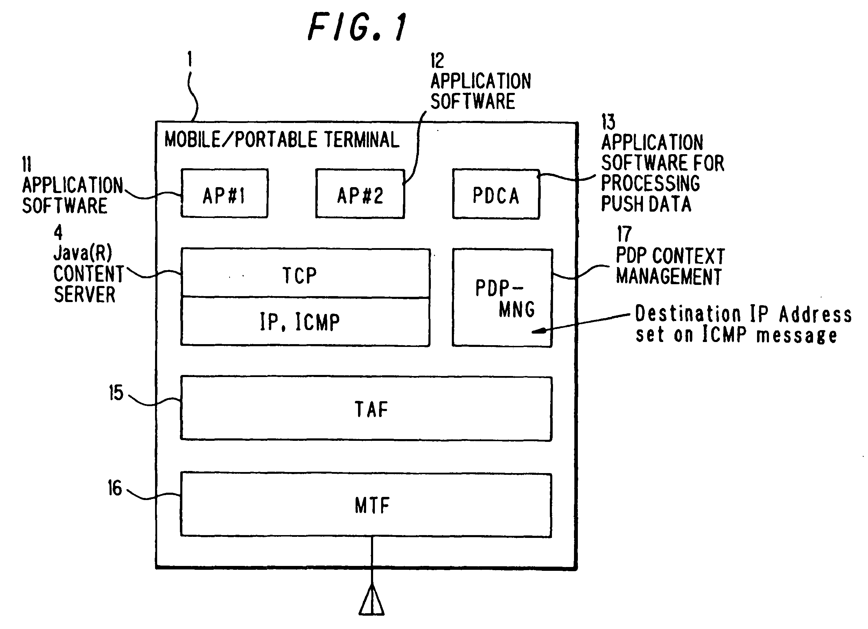

Then, embodiments of the present invention will be explained, referring to drawings. FIG. 1 is a block diagram showing a configuration of a mobile/portable terminal according to one embodiment of the present invention. In FIG. 1, the mobile/portable terminal 1 comprises: application software 11 and 12 [hereinafter, called as AP(1), and AP(2)]; application software 13 (hereinafter, called as PDAP) for processing push data; TCP (Transmission Control Protocol)/IP (Internet Protocol)/ICMP (Internet Control Message Protocol) 14; TAF (Terminal Adaptation Function) 15; MTF (Mobile Termination Function) 16; and PDP (Packet Data Protocol ) Context Management (PDP-MNG: Packet Data Protocol-Management) 17.

AP(1) 11 and AP (2) 12 are application software such as Browser, Java (R) and, software for an electronic mail (Mail). PDAP 13 is application software which is always active in the background to wait for push data.

In the mobile/portable terminal 1, push data which have been received from the always-on PDP context (Preserved PDP context) terminating at MTF 16 are transferred to TCP/IP/ICMP 14 at TAF 15 for protocol processing and are delivered to PDAP 13.

PDP Context Management 17 has a logic for establishment of the always-on PDP context at power-on of the mobile/portable terminal 1, and for re-establishment of the always-on PDP context, at least, in assumed circumstances such as squelch disconnection for a long time (out of a service area) , the squelch disconnection for a short time (out of a service area), and a case in which a request for deactivation of the PDP context is received from the side of a network. Accordingly, non-delivery of push data may be eliminated when nonconformity in recognition between states of PMM (Packet Mobility Management) and PDP is generated in the side of a network and that of the mobile/portable terminal 1.

That is, the establishment of the always-on PDP context may be guaranteed by health check between the mobile/portable terminal 1 and the terminal point of the PDP context on the side of the network.

Here, the push service automatically sends contents (data) from a push server, and uses the always-on PDP context [a logical session in an Air network].

That is, as an IP (Internet protocol) address which is allocated to a portable terminal device may be preserved in GGSN if the always-on PDP context has been established between the mobile/portable terminal 1 and GGSN [Gateway GPRS(General Packet Radio Service) Supporting Node], push data may be sent to the IP address of the mobile/portable terminal 1 through GGSN.

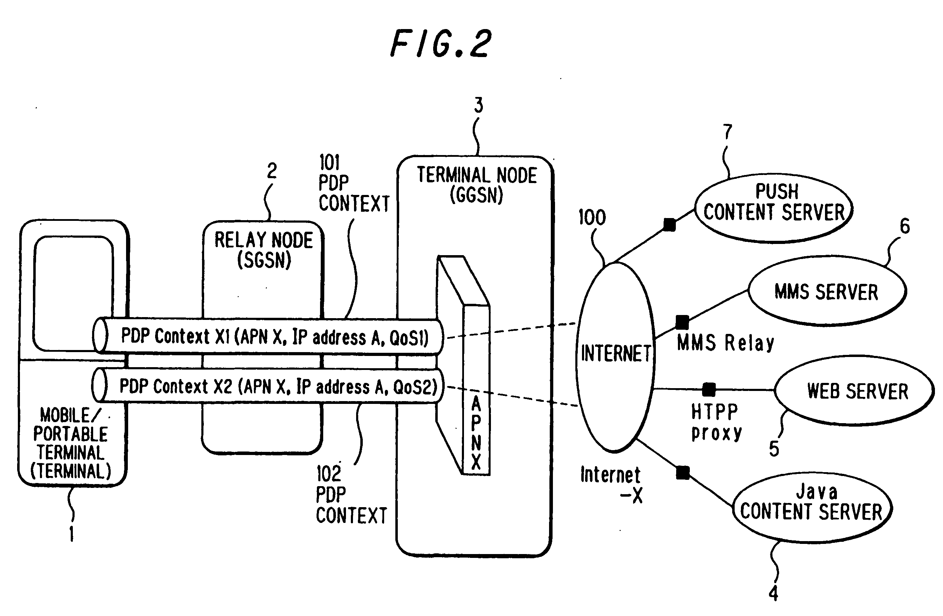

FIG. 2 is a view showing one example of a network to which one embodiment of the present invention is applied. In FIG. 2, using PDP contexts 101 and 102 which are a logical line terminating at a terminal node (GGSN) 3 through a relay node [SGSN: Serving GPRS Supporting Node], the mobile/portable terminal 1 accesses to various kinds of servers such as a Java (R) Content server 4, a Web server 5, and an MMS (Multi Media Service) server 6, which are provided on the Internet [External Network (Internet-X)] 100, and receives push data from a Push Content server 7.

As the always-on PDP context is connected at any time, and the above context is established as an always-on PDP Context 101. As a QoS (Quality of Services: Service quality) level [Background or Interactive traffic class] suitable for the push data is applied to the always-on PDP context, a Secondary PDP context 102 is separately established for application software requiring a QoS level different from the above, for example, for a traffic of a Streaming traffic class such as moving-picture delivery.

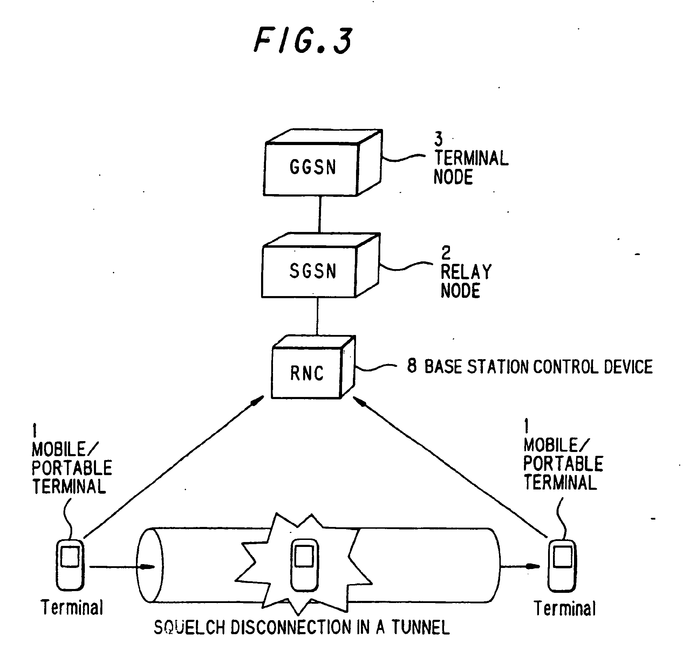

FIG. 3 is a view showing squelch disconnection in a state in which the PDP context is active in one embodiment of the present invention. FIG. 3 shows a state in which squelch disconnection (out of a service area) occurs in a tunnel when the mobile/portable terminal 1 is connected to the terminal node (GGSN) 3 through RNC (base station control device) 8 and the relay node (SGSN) 2.

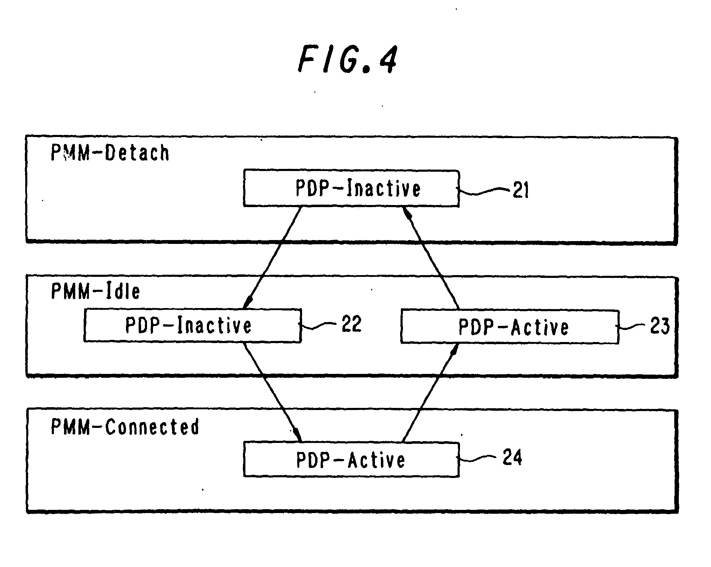

FIG. 4 is a view showing transition between combinations of PMM states and PDP states in one embodiment of the present invention. In FIG. 4, a "PMM Detach & PDP Inactive" state 21 indicates a state in which the PDP context is not established without position registration.

And, a "PMM-Idle & PDP Inactive" state 22 indicates a state in which, though position registration has been completed, neither RRC (Radio Resource Control) connection nor the PDP context has not been established as any calls have not been generated.

Moreover, a "PMM Connected & PDP-Active" state 24 indicates a state in which the RPC connection has been established to establish the PDP context, and packet data are being transmitted and received.

Furthermore, the "PMM-Idle & PDP-Active" state 24 indicates a state in which, though packet data have not been generated for a long time, and the RRC connection has been disconnected, the PDP context has been established and the establishment is still continuing.

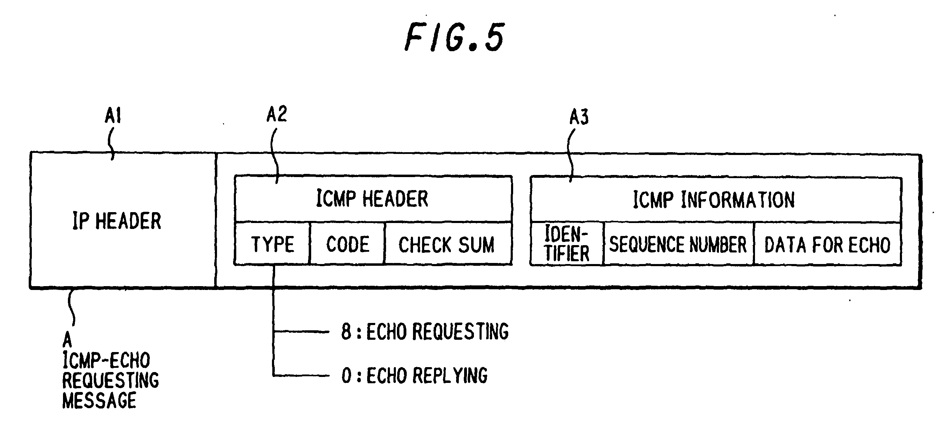

FIG. 5 is a view showing a configuration of an ICMP (Internet Control Message Protocol)-echo requesting message which is used for health check in one example of the present invention. In FIG. 5, the ICMP-echo requesting message A comprises: an IP header A1; an ICMP header A2, and ICMP information A3. The ICMP header A2 contains: [type]; [code]; and [check sum]. ICMP information A3 contains: [identifier] ; [sequence number]; and [data for an echo].

Here, a premise for operation of the application network which is one component in the configuration of one example of the present invention will be explained.

The PDP context is not instantaneously deactivated even when the relay node 2 and the terminal node 3 detect according to 3GPP (Third Generation Partnership Project) standard the squelch disconnection in a state (for example, a state shown in FIG. 3) in which the PDP context is active.

As a Periodic Routing Area Update timer [a default value: 54 minutes] is activated at the relay node 2 with the squelch disconnection as a trigger in an always-on state (Preservation state), that is, in an "PMM Idle & PDP Active" state 23, a call is detached and the sate is shifted down to the "PMM Detach &PDP Inactive" state 21 when the portable terminal is out of a service area for a longer time than the time set in the timer.

Under such a condition, the push data cannot be sent, as the IP address which the push content server 7 has preserved is cleared by release of the PDP context.

Shit up from the always-on state, that is, from "PMM Idle & PDP Active" state 23 to the "PMM Connected & PDP Active" state 24 can be realized by establishment of RRC connection for data transmission from the mobile/portable terminal 1, or by establishment of paging [Routing Area (RA) is known] & RRC connection for data transmission from the push content server 7.

When a request to activate the PDP context is delivered from the mobile/portable terminal 1 in a state in which the relay node 2 and the terminal node 3 preserve the PDP context, the relay node 2 re-establishes the PDP context after the PDP context which has been existed is released. At this time, the IP address of the mobile/portable terminal 1 is newly decided, and the IP address, which the push content server 7 holds, of the mobile/portable terminal 1 is updated.

Subsequently, operation of PDP Context Management 17 shown in FIG. 1 will be explained, referring to FIG. 1 to FIG. 5.

The PDP Context Management 17 requires TAF 15 at power-on of the mobile/portable terminal 1 to make a request for activation of the PDP context to the side of the network when the terminal 1 is within a service area, even if there is no data to be sent when a power-on state is changed to a power-off state.

When notification for deactivation of the PDP context is received from the network [the relay node (SGSN) 2/ the terminal node (GGSN) 3], PDP Context Management 17 requires TAF 15 to make a request for activation (re-establishment request) of the PDP context to the side of the network.

When the terminal 1 is moved from the inside to the outside of a service area and then returns from the outside to the inside of the area again, health check of the PDP context is regularly performed by the PDP Context Management 17 only when the terminal 1 is in the service area. The above health check is realized by using ICMP-echo requesting and ICMP-echo replying which are shown in FIG. 5.

The IP address which is defined in the terminal point of the PDP context is used for a Destination IP to be set in an IP header A1 of the ICMP-echo requesting message. Or, an IP address of an interface which has been provided dedicated to the ICMP echoes in the terminal node 3 may be used from the viewpoint of security.

Packets, which has been received in the interface dedicated to the ICMP echoes from interfaces other than the PDP context at which the terminal node 3 terminates, are discarded in order to prevent attack by a hacker.

As the mobile/portable terminal 1 has no step to know the IP address of the side of the terminal node 3 according to the 3GPP standard, an IP address to be used for an destination address which is used for the ICMP-echo requiring message is required to be prepared for the present function in the mobile/portable terminal 1.

When there is no returned ICMP-echo replying message, PDP Context Management 17 requires TAF 15 to transmit a request for activation (re-establishment request) of the PDP context to the side of the network.

Thus, the premise of the operation of the above-described application network may be realized in the present embodiment, that is, non-delivery of the push data may be prevented when the portable terminal 1 is out of the service area for a longer time than the time set in the timer.

Moreover, even when nonconformity in recognition between states of PMM and PDP is generated by any factors other than the above one in the side of the network and that of the mobile/portable terminal 1, non-delivery of the push data may be eliminated, as re-establishment of the PDP context may be guaranteed according to the present method.

### Industrial Applicability

As explained above, the present invention may have an advantage that health check between the mobile/portable terminal 1, to which the PDP context is connected at any time in order to receive a push service from a server, and the terminal point of the PDP context on the side of the network is performed in the terminal 1 to prevent non-delivery of the push data.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching herein set forth.

## Claims

1. A mobile/portable terminal (1) to which a PDP (Packet Data Protocol) context (101, 102) is connected at any time in order to receive a push service from a server (7), comprising:
PDP Context Management (17), which performs health check between the terminal (1) and a terminal point (3) of the PDP context (101, 102) on the side of a network
**characterized in that**
the PDP Context Management (17) has a function at least to establish the PDP context (101, 102) at power-on of the terminal (1) and to transmit a request of re-establishing said PDP context (101, 102) in a case in which it is detected that the terminal (1) having been out of a service area for a predetermined time period returns to the service area and the health check of the PDP context (101, 102) fails, and to re-establish said PDP context (101, 102) in a case in which a request for deactivation of the PDP context (101, 102) is received from the side of the network.

2. The mobile/portable terminal (1) according to claim 1, wherein
the PDP context (101, 102) is a logical session in an Air network which terminates at MTF (Mobile Termination Function).

3. A always-on PDP Context Management method of a mobile/portable terminal (1) to which a PDP (Packet Data Protocol) context (101, 102) is connected at any time in order to receive a push service from a server (7), wherein health check is performed between the terminal (1), and a terminal point (3) of the PDP context (101, 102) on the side of a network,
**characterized in that**
at least, processing for establishment of the PDP context (101, 102) at power-on of the mobile/portable terminal (1) and for transmitting a request for re-establishment of said PDP context (101, 102) in a case in which it is detected that the terminal (1) having been out of a service area for a predetermined time period returns to the service area and the health check of the PDP context (101, 102) fails, and for re-establishment of said PDP context (101, 102) in a case in which a request for deactivation of the PDP context (101, 102) is received from the side of the network.

4. The always-on PDP Context Management method according to claim 3, wherein
the PDP context (101, 102) is a logical session in an Air network which terminates at MTF (Mobile Termination Function).

## Patentansprüche

1. Mobiles/tragbares Endgerät (1), mit dem ein PDP-(Paketdatenprotokoll)-Kontext (101, 102) jederzeit verbunden ist, um von einem Server (7) einen Push-Dienst zu empfangen, mit:
einem PDP-Kontextmanagement (17), das einen Health-Check zwischen dem Endgerät (1) und einer Endgerätestelle (3) des PDP-Kontextes (101, 102) auf der Seite eines Netzwerks durchführt,
**dadurch gekennzeichnet, dass**
das PDP-Kontextmanagement (17) eine Funktion aufweist, um wenigstens den PDP-Kontext (101, 102) beim Einschalten des Endgeräts (1) aufzubauen und um eine Anforderung, den PDP-Kontext (101, 102) erneut aufzubauen, in einem Fall zu übertragen, bei dem detektiert wird, dass das Endgerät (1), dass für eine vorbestimmte Zeitdauer außerhalb eines Versorgungsbereichs war, in den Versorgungsbereich zurückkehrt und der Health-Check des PDP-Kontextes (101, 102) fehlschlägt, und um den PDP-Kontext (101, 102) in einem Fall erneut aufzubauen, bei dem eine Anforderung, den PDP-Kontext (101, 102) zu deaktivieren, von der Seite des Netzwerks erhalten wird.

2. Mobiles/portables Endgerät (1) gemäß Anspruch 1,
wobei der PDP-Kontext (101, 102) eine logische Verbindung in einem Luftnetzwerk ist, das bei einer MTF (Mobile Termination Function) endet.

3. Verfahren zum Verwalten eines immer eingeschalteten PDP-Kontextes des mobilen/tragbaren Endgeräts (1), mit dem ein PDP-(Paketdatenprotokoll)-Kontext (101, 102) zu jeder Zeit verbunden ist, um von einem Server (7) einen Push-Dienst zu erhalten, wobei ein Health-Check zwischen dem Endgerät (1) und einer Endgerätestelle (3) des PDP-Kontextes (101, 102) auf der Seite eines Netzwerks durchgeführt wird,
**dadurch gekennzeichnet, dass**
wenigstens eine Verarbeitung durchgeführt wird, um den PDP-Kontext (101, 102) beim Einschalten des mobilen/tragbaren Endgeräts (1) aufzubauen und um eine Anforderung, den PDP-Kontext (101, 102) erneut aufzubauen, in einem Fall zu übertragen, an dem dedektiert wird, dass das Endgerät (1), dass für eine vorbestimmte Zeitdauer außerhalb eines Versorgungsbereichs war, in den Versorgungsbereich zurückkehrt und der Health-Check des PDP-Kontextes (101, 102) fehlschlägt, und um den PDP-Kontext (101, 102) in einem Fall erneut aufzubauen, bei dem eine Anforderung, den PDP-Kontext (101, 102) zu deaktivieren, von der Seite des Netzwerks erhalten wird.

4. Das Verfahren zur Verwaltung eines immer eingeschalteten PDP-Kontextes gemäß Anspruch 3,
wobei der PDP-Kontext (101, 102) eine logische Verbindung in einem Luftnetzwerk ist, das bei einer MTF (Mobile Termination Function) endet.

## Revendications

1. Terminal mobile/portable (1) auquel un contexte PDP (Packet Data Protocol : protocole de paquets de données) (101, 102) est connecté à n'importe quel moment afin de recevoir un service d'acheminement en provenance d'un serveur (7), comprenant :
une gestion du contexte PDP (17), qui réalise une vérification de santé entre le terminal (1) et un point du terminal (3) du contexte PDP (101, 102) du côté d'un réseau
**caractérisé en ce que**
la gestion du contexte PDP (17) a une fonction au moins d'établir le contexte PDP (101, 102) à la mise sous tension du terminal (1) et de transmettre une demande de rétablissement dudit contexte PDP (101, 102) dans un cas dans lequel on détecte que le terminal (1) qui a été hors d'une zone de service pendant une période de temps prédéterminée retourne à la zone de service et que la vérification de santé du contexte PDP (101, 102) échoue, et de rétablir ledit contexte PDP (101, 102) dans un cas dans lequel une demande de désactivation du contexte PDP (101, 102) est reçue en provenance du côté du réseau.

2. Terminal mobile/portable (1) selon la revendication 1, dans lequel
le contexte PDP (101, 102) est une session logique dans un réseau aérien qui se termine à une MTF (Mobile Termination Function : fonction de terminaison mobile).

3. Procédé de gestion du contexte PDP toujours sous tension d'un terminal mobile/portable (1) auquel un contexte PDP (Packet Data Protocol) (101, 102) est connecté à n'importe quel moment afin de recevoir un service d'acheminement en provenance d'un serveur (7), dans lequel la vérification de santé est réalisée entre le terminal (1), et un point du terminal (3) du contexte PDP (101, 102) du côté d'un réseau,
**caractérisé en ce que**
au moins, traiter l'établissement du contexte PDP (101, 102) à la mise sous tension du terminal mobile/portable (1) et la transmission d'une demande de rétablissement dudit contexte PDP (101, 102) dans un cas dans lequel on détecte que le terminal (1) ayant été hors d'une zone de service pendant une période de temps prédéterminée retourne à la zone de service et que la vérification de santé du contexte PDP (101, 102) échoue, et le rétablissement dudit contexte PDP (101, 102) dans un cas dans lequel une demande de désactivation du contexte PDP (101, 102) est reçue en provenance du côté du réseau.

4. Procédé de gestion du contexte PDP toujours sous tension selon la revendication 3, dans lequel
le contexte PDP (101, 102) est une session logique dans un réseau aérien qui se termine à une MTF.
